Europäisches Patentamt

European Patent Office

Office européen des brevets

(11) Publication number: **0 530 712 A1**

# EUROPEAN PATENT APPLICATION

(21) Application number: **92114762.5**

(22) Date of filing: **28.08.92**

(51) Int. Cl.5: **G06F 1/06**

(30) Priority: **29.08.91 JP 218756/91**

(43) Date of publication of application:
**10.03.93 Bulletin 93/10**

(84) Designated Contracting States:
**DE FR GB**

(71) Applicant: **NEC CORPORATION**
**7-1, Shiba 5-chome Minato-ku**
**Tokyo 108-01(JP)**

(72) Inventor: **Yamashina, Masakazu, c/o NEC**
**Corporation**
**7-1, Shiba 5-chome**
**Minato-ku, Tokyo(JP)**

(74) Representative: **Betten & Resch**
**Reichenbachstrasse 19**
**W-8000 München 5 (DE)**

(54) **Multiple-clocked processor and method of operation.**

(57) Data are received from and sent to the exterior of a processor in the same time as the cycle time required for reading out data of an external storage circuit (6), and the circuits involved in the processor is controlled at a speed several times as large as that time, by the function that the input and output operation of the signals from and to the external storage circuit is carried out via an input/output circuit (5) operating in synchronism with a clock signal of low frequency which is entered from the exterior to the synchronizing circuit (4), and the signal is passed from and to the exterior of the processor at a low frequency, while it is passed therebetween at a high speed in synchronism with the multiplied synchronizing signal within the processor. Therefore, the passage of data to and from the external storage circuit can be carried out in a single cycle, resulting in small power consumption without degrading the performance of the processor.

FIG. 2

## BACKGROUND OF THE INVENTION

The present invention relates to a processor and a method of driving the same.

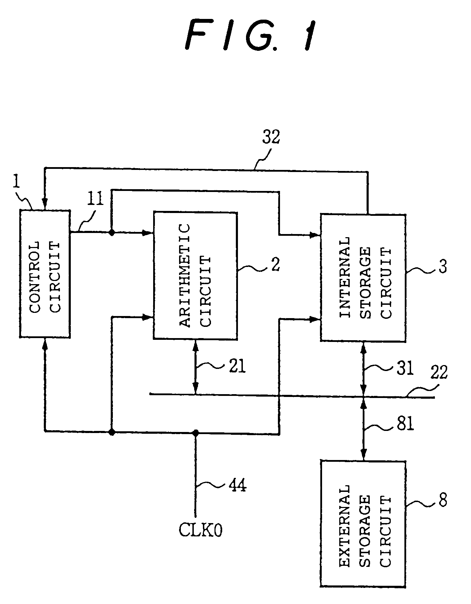

Fig. 1 illustrates an arrangement of a conventional processor, which comprises a control circuit 1, arithmetic circuit 2, internal storage circuit 3 and a bus 22. Outside of it, an external storage circuit 8 is provided. The operation of the control circuit 1, arithmetic circuit 2 and internal storage circuit 3, passage of control signals through a first and second control signal lines 11 and 32 and passage of data through a first I/O signal line 21, second I/O signal line 31, third I/O signal line 81 and the bus 22 are each conducted in synchronism with a synchronizing signal CLK0 through a synchronising signal input signal line 44 from outside of the processor. The operation of the processor is carried out by the external synchronizing signal CLK0 entered through the synchronizing signal line 44. Further, feeding rate of the data instruction is the same for the interior and the exterior of the processor. The cycle time for reading out the data of the external storage circuit 8 is equal to that of the processor.

With this processor, instructions stored within the internal storage circuit 3 are read out through the second control signal line 32 to decode by the control circuit 1. Its result is supplied to the arithmetic circuit 2 and the internal storage circuit 3 through the first control signal line 11. The arithmetic circuit 2 processes it in accordance with the instruction from the control circuit 1 to emit the result to the first I/O signal line 21 to store into the internal storage circuit 3 through the bus 22 and the second I/O signal line 31. Similarly, it is stored into the external storage circuit 8 through the third I/O signal line 81. The same is also the case with reading out of the data. These operations are carried out in synchronism with the synchronizing signal CLK0 supplied from the exterior through the synchronising I/O signal line 44. In order to carry out the passage of signals between the interior and exterior of the processor at a high speed, a circuit called ECL (Emitter Coupled Logic) is used to steadily pass the current and propagate the signal by the change of the current. However, since the current constantly flows through this ECL, power consumption is increased. On the other hand, with TLL or MOS transistor circuits in which the current does not steadily flow, since the voltage amplitude required for passage of the signals is great, noise or power consumption is increased making it impossible to speedize the passage of the signals. In addition, since the external storage circuit also has to be speedized in operation, it causes increase of the cost and reduction of the reliability of the system.

## SUMMARY OF THE INVENTION

Accordingly, an object of the present invention is to eliminate the foregoing drawbacks and to provide an arrangement of the processor and a method of driving the same which allow a system involving a low power consumption and a low cost to be achieved without degrading the performance of the processor.

According to the present invention, there is provided a processor comprising:

a control circuit having a synchronizing signal input terminal, a control signal input terminal and a control signal output terminal;

an arithmetic circuit having a synchronizing signal input terminal, a control signal input terminal and an input/output terminal;

an internal storage circuit having a synchronizing signal input terminal, a control signal input terminal, a control signal output terminal and an input/output terminal;

a synchronizing circuit having a synchronizing signal input terminal, and first and second synchronizing signal output terminals;

an input/output circuit having first, second and third synchronizing signal input terminals; and

a bus connecting said input/output terminals of said arithmetic circuit, said internal storage circuit and said input/output circuit to each other;

said synchronizing signal input terminals of said control circuit, said arithmetic circuit and said internal storage circuit being connected to each other;

said control signal output terminal of said internal storage circuit being connected to said control signal input terminal of said control circuit;

said control signal output terminal of said control circuit being connected to said control signal input terminals of said arithmetic circuit and said internal storage circuit;

said second synchronizing signal output terminal being connected to said synchronizing signal input terminal of said input/output circuit.

In addition, there is provided a method of driving the processor as set forth above, comprising:

entering a first synchronizing signal from outside to said synchronizing signal input terminal of said synchronizing circuit from the exterior;

generating a second synchronizing signal at said first synchronizing signal output terminal, whose frequency is the same as that of said first synchronizing signal to said synchronizing signal output terminal of said input/output circuit;

generating a third synchronizing signal at said second synchronizing signal output terminal, whose frequency is equal to the first synchronizing signal multiplied by said first synchronizing circuit at said output terminal synchronizing circuit;

feeding said third synchronizing signal thus multiplied to the synchronizing signal input terminals of said control circuit, said arithmetic circuit, and said internal storage circuit, respectively;

supplying said third synchronizing signal to signals on said synchronizing signal input terminals of said control circuit, said arithmetic circuit, and internal storage circuit;

synchronizing with said third synchronizing signal the signals on said control signal input and output terminals of said control circuit, the signals on said control signal input and output terminals and said input/output terminals of said arithmetic circuit, said control signal input and output terminals and said input/output terminals of said internal storage circuit, the signal on said input/output terminal of said input/output circuit, and the signal on said bus;

supplying said second synchronizing signal to said synchronizing signal input terminal of said input/output circuit, and

synchronizing the signal on said input/output terminal of said input/output circuit with said second synchronizing circuit.

The present invention also provides a processor which includes a further or second internal storage circuit which can be used with the first storage circuit for storing the instruction separated.

In a preferred embodiment of the present invention, the cycle time required for reading out data of the external storage unit by using the processor is generally longer than the operating cycle time of the processor. Therefore, even if the I/O operation of the processor is carried out at the same operating frequency as in the interior of the processor, only the power consumption is increased and the performance is not improved. According to the processor of the present invention, since the input/output data is passed to and from in the same period of time as the cycle time required for reading out the data of the external storage circuit and the internal circuit may be controlled at a speed as high as its multiple, the increase of the power consumption in the I/O circuit can be prevented.

Generally, since the power consumption of the I/O circuit of the processor accounts for 50 percent of that required for the entire chip, if the speed of the I/O interface is lowered, then the overall power consumption can be reduced. Yet, at this time, the performance cannot be degraded as can be proved according to the following formula.

Assuming that the execution time of the program be

Te,Te = (C + Ma x Mr x Mp) x T x I

where C is the number of clocks per instruction (hereinafter referred to as "CPI"; Ma is an average number of accesses to the internal storage circuit per instruction; Mr is an error rate in accessing the internal storage circuit; Mp is a cycle required for accessing to the external circuit access when some error is made in accessing to the internal storage circuit, that is, the error penalty; T: clock cycle time for the processor; I is number of instructions of the program.

If it is assumed that the processor can process the arithmetic operation and operate the internal storage circuit at a frequency of 1 GHz and that the cycle time of the external storage circuit is 10 nsec, then

T = 1 nsec.

Assuming that

| I = | 10000 |
| Mp = | 10 |
| Mr = | 0.1 |
| Ma = | 1 |
| C = | 1.5 |

then

Te = 25$\mu$sec.

This is equal to say that the I/O circuit was operated at the same frequency of 1GHz as the internal operating frequency.

In contrast, if the I/O circuit is slowly operated at 10 nsec, which is ten times as large, then

| C = | 1.5/10 |
| Mp = | 1 |

and other values I, Ma and Mr remain the same with the result that Te also remains the same as at the I/O frequency of 1 GHz. In other words, when the operating frequency of the interior of the processor and the cycle time of the external storage circuit are determined, the performance of the processor is uniquely determined. Therefore, the I/O frequency of the processor is suitably set to the cycle frequency of the external storage circuit, and it becomes possible to provide a processor and a method of driving the same which allow the power consumption to be greatly reduced without sacrificing the processing speed of the system.

BRIEF DESCRIPTION OF THE DRAWINGS

Fig. 1 is a view illustrating an arrangement of the conventional processor;
Fig. 2 is a block diagram of a processor according to a first embodiment according to the present invention;
Fig. 3 is a block diagram of a processor according to a second embodiment of the present invention;

Fig. 4(a) is a timing chart of the instruction execution for a conventional processor, and Fig. 4(b) is a timing chart of the instruction execution for the embodiment of the present invention;

Fig. 5 is a view illustrating a relationship between the virtual clock cycle time and the processing time in the embodiment of the present invention; and

Fig. 6 is a view illustrating the relationship between the circuit arrangement and the virtual clock operating frequency in the embodiment of the present invention.

## DETAILED DESCRIPTION OF THE PREFERRED EMBODIMENTS

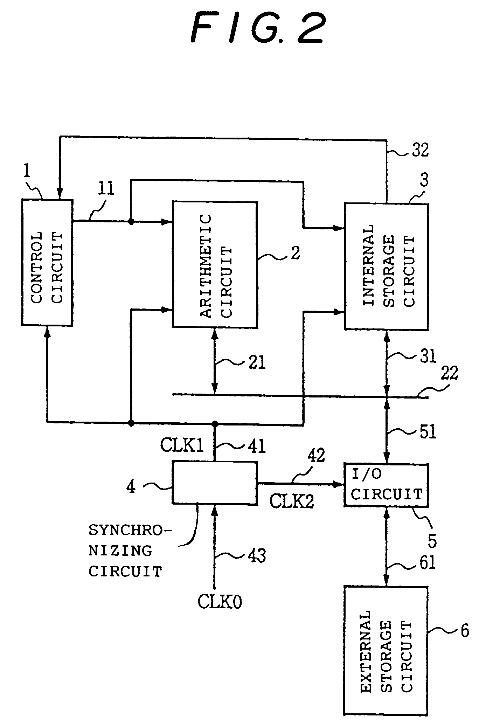

Fig. 2 illustrates an arrangement of a processor of the present invention, which comprises a control circuit 1, an arithmetic circuit 2, an internal storage circuit 3, a bus 22, a synchronizing circuit 4 and an I/O circuit 5. At the exterior thereof, an external storage circuit 6 is provided. The synchronizing circuit 4 multiplies the external synchronizing signal CLK0 entered through an input signal line 43 for synchronizing signal to feed a resulting synchronizing signal CLK1 through an output signal line 41 for synchronizing signal to the control circuit 1, arithmetic circuit 2 and the internal storage circuit 3. In addition, at the same time, the synchronizing circuit 4 feeds a synchronizing signal CLK2 having the same frequency as that of the external synchronizing signal CLK0 to the I/O circuit 5 through an output signal line 42 for synchronizing signal. As a result, the operation of the control circuit 1, arithmetic circuit 2 and the internal storage circuit 3, passage of the control signal through the control signal lines 11 and 32 and passage of data through the I/O signal line 51 and the bus 22 are each carried out in synchronism with the synchronizing signal CLK1. Synchronizing signal CLK0 is on the high frequency level because it results from the multiplied external synchronizing signal CLK1. In contrast, passage of signals between the exterior and the interior of the processor is carried out in synchronism with the foregoing synchronizing signal CLK2 through an I/O signal line 61. Since the synchronizing signal CLK2 is of the same frequency as in the external synchronizing signal CLK0, its operating frequency is low as compared with that of the arithmetic circuit 2 or internal storage circuit 3.

According to the processor of this embodiment, instructions stored within the internal storage circuit 3 are read out through the control signal line 32 to be decoded within the control circuit 1. The result is fed to the arithmetic circuit 2 and the internal storage circuit 3 through the control signal line 11. Arithmetic circuit 2 processes in accordance with the instruction of the control circuit 1 to emit the result to the I/O signal line 21 to store into the internal storage circuit 3 through the bus 22 and a second I/O signal line 31. Similarly, it is fed to the I/O circuit 5 through the I/O signal line 51 to be stored into the external storage circuit 6 through the I/O signal line in synchronism with the synchronising signal CLK2. The same is also the case with reading out of the data.

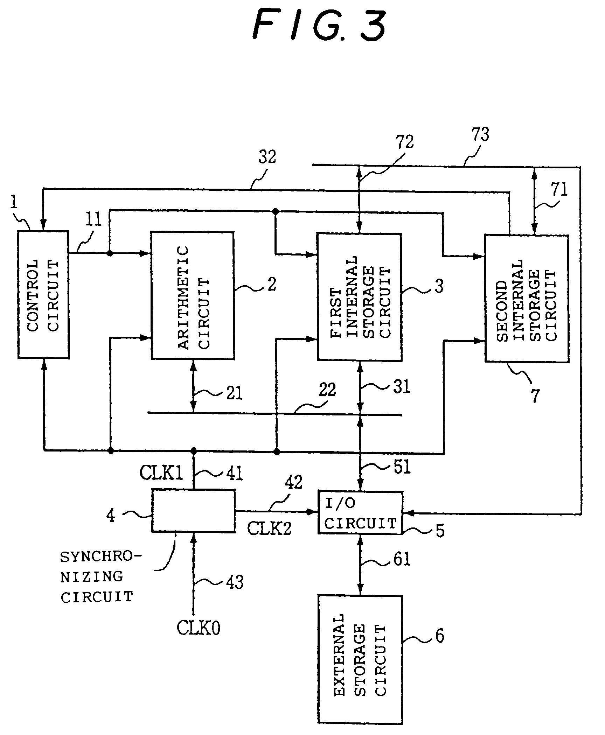

Fig. 3 illustrates an arrangement of a second embodiment of the processor according to the present invention, which is additionally provided with a second internal storage circuit 7 operating by the synchronizing signal CLK1 and a bus dedicated to the internal storage circuit 7 as compared with the first embodiment. This embodiment can be used with the storage circuit 3 for storing data and the storage circuit 7 for storing the instruction separated because it provides two internal storage circuits. At that time, in order to read out the content of the internal storage circuit to the outside and write it therefrom, data is passed between the I/O circuit 5 through the I/O signal line 72, I/O signal line 71 and the dedicated bus 73. Also in this embodiment, passage of signals within the processor is carried out at a high frequency, and passage of signals between the interior and the exterior of the processor is carried out at a low frequency.

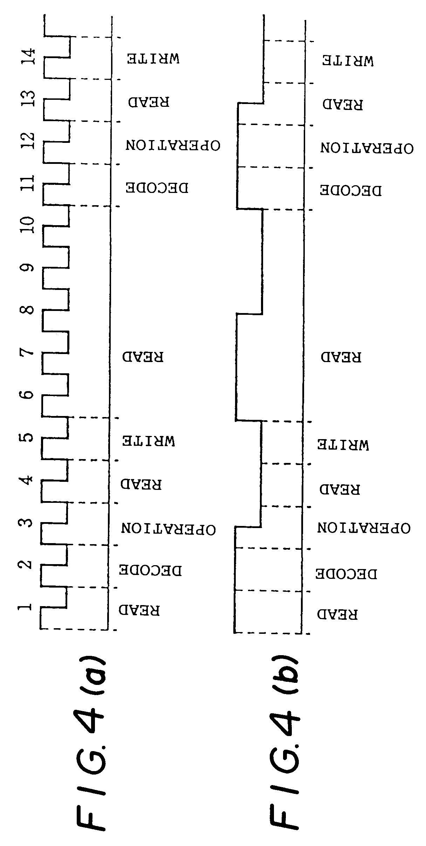

Fig. 4 illustrates a timing chart of this embodiment. Fig. 4(a) illustrates a timing for executing the instruction for a conventional processor. First through fourteenth cycles of the clock signal within the processor are illustrated at the upper portion of the timing chart, in which the operating clock frequency of the I/O circuit of the processor and the operating clock frequency within the processor are made equal to each other. Referring to Fig. 4(a), although in almost every case, each instruction is executed in a single cycle, this corresponds to a state in which necessary data or instruction is stored within the internal storage circuit 3. However, unless the necessary data or instruction is within the internal storage circuit, data must be accessed to the external storage circuit 8. This is shown over the sixth through tenth cycles. In this example, the cycle time of the external storage circuit 8 is five times as long as that prevailing within the processor. Fig. 4(b) illustrates a timing for executing the instruction according to this embodiment. At its upper portion, the operating clock signal of the I/O circuit is illustrated. The operating clock frequency of the I/O circuit is one tenth as large as that of the processor. Here, the clock signal within the processor, which is shown at the upper portion of Fig. 4(a), is termed actual clock signal, and the clock signal of the processor I/O circuit, which is shown at the upper portion of Fig.

4(b), is termed virtual clock signal. In this embodiment, it can be said that the frequency of the virtual clock signal is one fifth as large as that of the actual clock signal. However, since the number of the executed instructions per virtual clock becomes five times as large and the passage of data from and to the external storage circuit can be carried out by a single virtual clock, the overall processing time of the program is the same.

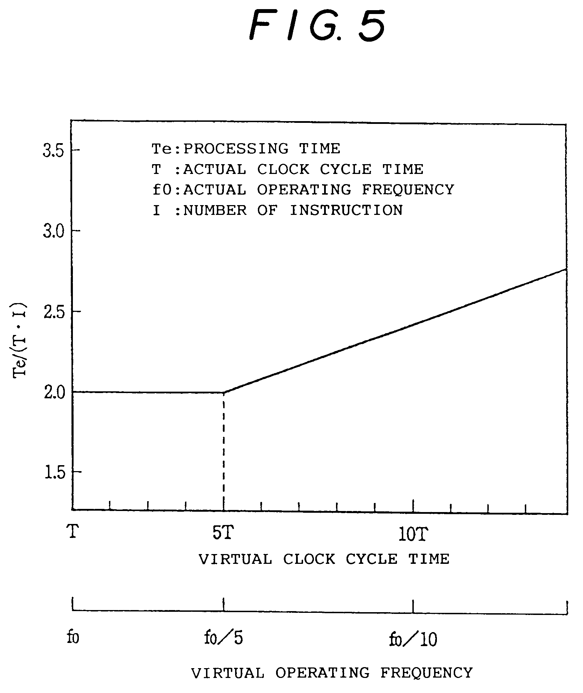

Fig. 5 shows a relationship between Te/(T· I) (where T is actual clock cycle time, I is number of instructions of the program) and the virtual clock cycle time for the first and second embodiments, which is evaluated by using a formula (1) for the processing time T of the program. Incidentally, the cycle time of the external storage circuit 6 is assumed to be 5T. Further, CPI when the virtual clock cycle time is made equal to the actual clock cycle time T is assumed to be 1.5, the average number Ma of accesses to the internal storage circuit per instruction is assumed to be 1 and the error rate Mr when the internal storage circuit is accessed is assumed to be 0.1. Since the cycle time of the external storage circuit 6 is 5T, the cycle required to access the external storage circuit 6 when the access to the internal storage circuit 3 is failed, that is, the error penalty Mp equals 5. As shown in Fig. 5, the processing time Te is constant over 5T, in which the virtual clock time equals the cycle time of the external storage circuit 6, through the actual clock cycle time T. However, if the virtual clock time is made greater than 5T, then the processing time Te is increased. That is, even if the virtual operating clock frequency is lowered down to one fifth of the actual operating clock frequency f0, the processing performance is not degraded.

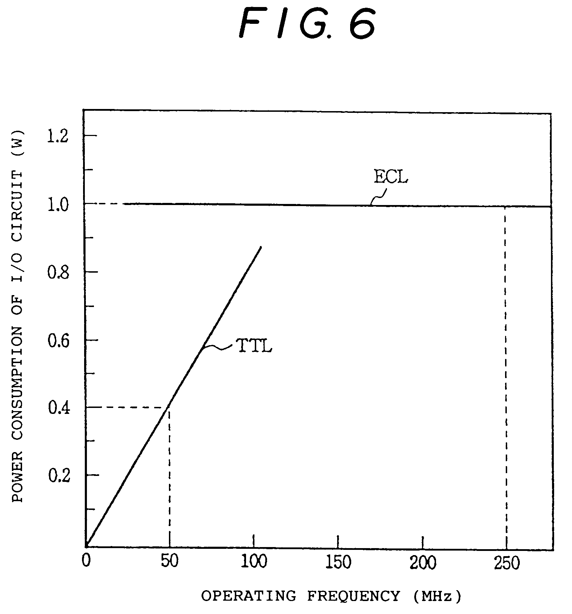

Next, Fig. 6 shows a result obtained by comparing TTL with ECL in terms of the power consumption of the I/O circuit. Foe example, when the actual operating clock frequency is 250 MHz, if the virtual operating clock frequency can be turned into one fifth as large, then it can be found that the power consumption of the I/O circuit can be reduced to 40 %. Incidentally, referring to Fig. 6, the number of output circuits is 150, the power voltage 3.3 V, the current of the IECL output circuit 2 mA, the load capacity of the output circuit 10 pF and the number of the simultaneously operating output circuits is one half as large.

## Claims

1. A processor comprising:

a control circuit (1) having a synchronizing signal input terminal, a control signal input terminal and a control signal output terminal;

an arithmetic circuit (2) having a synchronizing signal input terminal, a control signal input terminal and an input/output terminal;

an internal storage circuit (3) having a synchronizing signal input terminal, a control signal input terminal, a control signal output terminal and an input/output terminal;

a synchronizing circuit (4) having a synchronizing signal input terminal, and first and second synchronizing signal output terminals;

an input/output circuit (5) having first, second and third synchronizing signal input terminals; and

a bus (22) connecting said input/output terminals of said arithmetic circuit (2), said internal storage circuit (3) and said input/output circuit (5) to each other;

said synchronizing signal input terminals of said control circuit (1), said arithmetic circuit (2) and said internal storage circuit (3) being connected to each other;

said control signal output terminal of said internal storage circuit (3) being connected to said control signal input terminal of said control circuit (1);

said control signal output terminal of said control circuit (1) being connected to said control signal input terminals of said arithmetic circuit (2) and said internal storage circuit (3);

said second synchronizing signal output terminal being connected to said synchronizing signal input terminal of said input/output circuit (5).

2. The processor according to claim 1 which further comprises an external storage circuit (6) having an input/output terminal connected to said input/output terminal of said input/output circuit (5).

3. A processor comprising:

a control circuit (1) having a synchronizing signal input terminal, a control signal input terminal and a control signal output terminal;

an arithmetic circuit (2) having a synchronizing signal input terminal, a control signal input terminal and an input/output terminal;

a first internal storage circuit (3) having a synchronizing signal input terminal, a control signal input terminal, a control signal output terminal and an input/output terminal;

a second internal storage circuit (7) having a synchronizing signal input terminal, a control signal input terminal, a control signal output terminal and an input/output terminal;

a synchronizing circuit (4) having a synchronizing signal input terminal, and first and second synchronizing signal output terminals;

an input/output circuit (5) having first, second and third synchronizing signal input terminals;

a first bus (22) connecting said input/output terminals of said arithmetic circuit (2), said internal storage circuit (3) and said input/output circuit (5) to each other; and

a second bus (73) connecting said input/output terminals of said first internal storage circuit (3), said second internal storage circuit (7) and said input/output circuit (5) to each other;

said synchronizing signal input terminals of said control circuit (1), said arithmetic circuit (2), said first internal storage circuit (3) and said second internal storage circuit (7) being connected to each other;

said control signal output terminal of said second internal storage circuit (7) being connected to said control signal input terminal of said control circuit (1);

said control signal output terminal of said control circuit (1) being connected to said control signal input terminals of said arithmetic circuit (2), said first internal storage circuit (3) and said second internal storage circuit (7);

said second synchronizing signal output terminal being connected to said synchronizing signal input terminal of said input/output circuit (5).

4. The processor according to claim 3 which further comprises an external storage circuit (6) having an input/output terminal connected to said input/output terminal of said input/output circuit (5).

5. A method of driving a processor which comprises;

a control circuit (1) having a synchronizing signal input terminal, a control signal input terminal and a control signal output terminal;

an arithmetic circuit (2) having a synchronizing signal input terminal, a control signal input terminal and an input/output terminal;

an internal storage circuit (3) having a synchronizing signal input terminal, a control signal input terminal, a control signal output terminal and an input/output terminal;

a synchronizing circuit (4) having a synchronizing signal input terminal, and first and second synchronizing signal output terminals;

an input/output circuit (5) having first, second and third synchronizing signal input terminals; and

a bus (22) connecting said input/output terminals of said arithmetic circuit (2), said internal storage circuit (3) and said input/output circuit (5) to each other;

said synchronizing signal input terminals of said control circuit (1), said arithmetic circuit (2) and said internal storage circuit (3) being connected to each other;

said control signal output terminal of said internal storage circuit (3) being connected to said control signal input terminal of said control circuit (1);

said control signal output terminal of said control circuit (1) being connected to said control signal input terminals of said arithmetic circuit (2) and said internal storage circuit (3);

said second synchronizing signal output terminal being connected to said synchronizing signal input terminal of said input/output circuit (5);

said method comprising:

entering a first synchronizing signal (CLK0) from outside to said synchronizing signal input terminal of said synchronizing circuit (4) from the exterior;

generating a second synchronizing signal (CLK2) at said first synchronizing signal output terminal, whose frequency is the same as that of said first synchronizing signal (CLK0) to said synchronizing signal output terminal of said input/output circuit (5);

generating a third synchronizing signal (CLK1) at said second synchronizing signal output terminal, whose frequency is equal to the first synchronizing signal (CLK0) multiplied by said first synchronizing circuit (4) at said output terminal synchronizing circuit (4);

feeding said third synchronizing signal thus multiplied to the synchronizing signal input terminals of said control circuit (1), said arithmetic circuit (2), and said internal storage circuit (3),respectively;

supplying said third synchronizing signal to signals on said synchronizing signal input terminals of said control circuit (1), said arithmetic circuit (2), and internal storage circuit (3);

synchronizing with said third synchronizing signal the signals on said control signal input and output terminals of said control circuit (1), the signals on said control signal input and output terminals and said input/output terminals of said arithmetic circuit (2), said control signal input and output terminals and said input/output terminals of said internal storage circuit (3), the signal on said input/output terminal of said input/output circuit (5), and the signal on said bus (22);

supplying said second synchronizing signal (CLK2) to said synchronizing signal input terminal of said input/output circuit (5), and

synchronizing the signal on said input/output terminal of said input/output circuit (5) with said second synchronizing circuit (4).

# *F I G. 1*

# FIG. 2

# F I G. 3

F I G. 4 (a)

F I G. 4 (b)

# F I G. 5

Te:PROCESSING TIME
T :ACTUAL CLOCK CYCLE TIME
f0:ACTUAL OPERATING FREQUENCY
I :NUMBER OF INSTRUCTION

# F I G. 6

European Patent Office

# EUROPEAN SEARCH REPORT

Application Number

EP    92 11 4762

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | EP-A-0 478 132 (TANDEM)<br>* the whole document *<br>--- | 1-5 | G06F1/06 |
| X | US-A-4 473 879 (HITACHI)<br>* the whole document *<br>--- | 5 | |
| A | US-A-4 095 267 (TEC)<br>* the whole document *<br>--- | 5 | |
| X | US-A-4 677 586 (TEXAS INSTRUMENTS)<br>* column 3, line 53 - column 6, line 45;<br>figures 1-3 *<br>----- | 1-4 | |
| | | | **TECHNICAL FIELDS SEARCHED (Int. Cl.5 )**<br><br>G06F |

The present search report has been drawn up for all claims

| Place of search | Date of completion of the search | Examiner |
|---|---|---|
| THE HAGUE | 17 DECEMBER 1992 | GILL S.M. |

EPO FORM 1503 03.82 (P0401)